# EUROPÄISCHE PATENTSCHRIFT

(11) **EP 0 870 959 B1**
(45) Veröffentlichungstag und Bekanntmachung des Hinweises auf die Patenterteilung: **04.08.2004**
(21) Anmeldenummer: 97810389.3
(22) Anmeldetag: 19.06.1997
(51) Int. Cl.: F16K 31/06

(54) **Elektromagnetisches Ventil für hydraulische Medien**
Solenoid valve for hydraulic fluids
Electrovanne pour fluides hydrauliques

(30) Priorität: 08.04.1997 EP 97810203
(43) Veröffentlichungstag der Anmeldung: 14.10.1998
(73) Patentinhaber: Wärtsilä Schweiz AG, 8401 Winterthur (CH)
(72) Erfinder: Wunder, Alfred Franz, 8442 Hettlingen (CH)
(74) Vertreter: Sulzer Management AG

(56) Entgegenhaltungen:
- WO-A-95/27865
- DE-A- 2 209 206
- DE-A- 3 438 582
- DE-A- 3 608 554
- FR-A- 1 458 177
- GB-A- 877 150
- US-A- 2 912 008
- US-A- 4 951 878

## Beschreibung

Die Erfindung betrifft ein elektromagnetisches Ventil für hydraulische Medien gemäss dem Oberbegriff des Anspruches 1.

Ventile dieser Art sind beispielsweise aus der DE A 22 09 206 bekannt und enthalten ein Gehäuse und einen Ventilschieber, der im Gehäuse verschiebbar angeordnet ist. An den Stirnseiten des Ventilschiebers ist je ein Ankerteil vorgesehen, dem jeweils ein Elektromagnet zugeordnet ist, derart, dass bei Erregung der Elektromagneten der Ventilkörper jeweils verschoben wird. Mit einem solchen Ventil werden zwar kurze Schaltzeiten erreicht jedoch ist die Abnutzung insbesondere an den Steuerkanten sehr stark, so dass das Ventil bereits nach einer relativ geringen Anzahl von Schaltbewegungen ersetzt werden muss. Dabei ist beispielsweise aus der US A 4 951 878 bekannt, dass die Lebensdauer eines magnetischen Ventils eines Kraftstoffeinspritzsystems durch Hartbeschichtung verlängerbar ist.

Der Erfindung liegt die Aufgabe zugrunde, ein elektromagnetisches Ventil zu verbessern.

Diese Aufgabe wird erfindungsgemäss durch die Merkmale des Anspruches 1 gelöst.

Die mit der Erfindung erzielbaren Vorteile sind darin zu sehen, dass durch die Hartbeschichtung die Gleiteigenschaften und die Lebensdauer verbessert werden und dass durch Minimierung der Wirbelstromverluste sehr kurze Schaltimpulse zur Betätigung des Ventiles ausreichen.

Nachfolgend wird die Erfindung anhand der beiliegenden Zeichnungen erläutert.

Es zeigen:

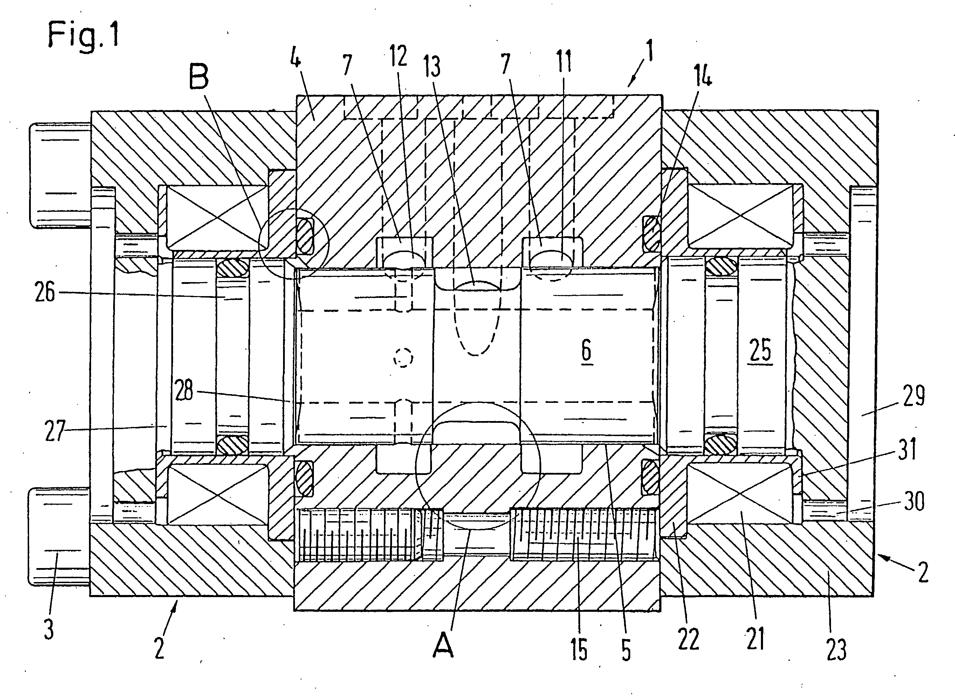

- Fig. 1: Einen Schnitt durch ein Ausführungsbeispiel eines erfindungsgemässen Ventils;
- Fig. 2: eine Einzelheit "A" in Fig. 1 im grösseren Massstab;
- Fig. 3: eine Einzelheit "B" in Fig. 1 im grösseren Massstab;

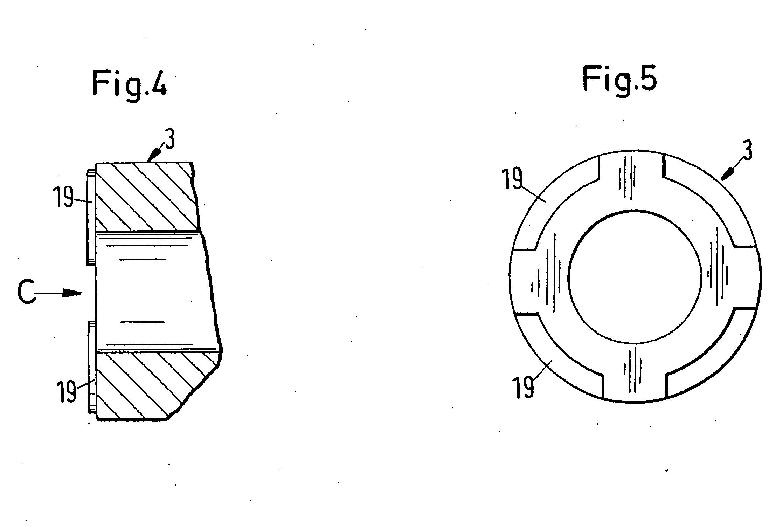

- Fig. 4: ein Endabschnitt des Ventilschiebers im Schnitt und
- Fig. 5: eine Ansicht in Richtung des Pfeiles C in Fig. 4.

Das Ventil besteht im wesentlichen aus einem Ventilteil 1 und zwei Antriebsteilen 2, die als Elektromagnete ausgebildet und mittels Schrauben 3 am Ventilteil 1 befestigt sind.

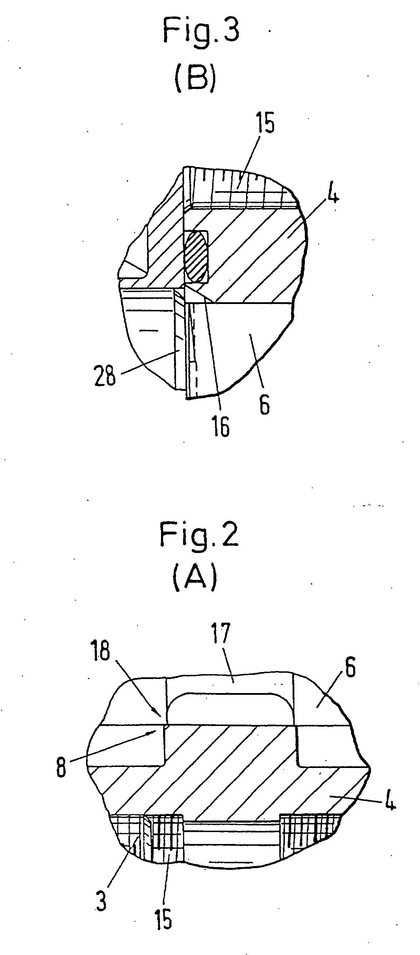

Der Ventilteil 1 besteht aus einem Gehäuse 4 mit einer Durchbohrung 5 entlang der Zylinderachse und aus einem Ventilschieber 6, der in der Durchbohrung hin und her bewegbar angeordnet ist. Das Gehäuse 4 besteht aus einem magnetischen Werkstoff. Im Gehäuse 4 sind zwei Ringnuten 7 ausgebildet, die parallel verlaufend in der Durchbohrung 5 ausgebildet sind, derart, dass die nebeneinanderliegenden Kanten jeweils eine Steuerkante 8 bilden (Fig. 2). Ferner sind ein Zufuhrkanal 11 und ein Rücklaufkanal 12, die jeweils in eine Ringnut 7 münden sowie ein Verbraucherkanal 13 im Gehäuse ausgebildet, der in die Durchbohrung 5 mündet. In den Stirnflächen des Gehäuses 4 sind ringförmige Ausnehmungen zur Aufnahme von Dichtungsringen 14 vorgesehen. Es sind vier Gewindelöcher 15 im Gehäuse 4 ausgebildet, um die Antriebsteile am Gehäuse zu befestigen. Im Gehäuse 1 sind an beiden Enden der Durchbohrung jeweils eine Abschrägung 16 ausgebildet (Fig. 3).

Der Ventilschieber 6 ist zylinderförmig und weist eine ringförmige Nut 17 auf, derart, dass eine Ringkammer entsteht, deren Kanten die Steuerkanten 18 am Ventilschieber 3 bilden (Fig. 2). Der Ventilschieber 6 ist als Hohlzylinder ausgebildet und weist Radialbohrungen auf, die mit dem Rücklaufkanal 12 kommunizieren. Am Umfang ist eine ringförmige Nut 17 ausgebildet, so dass eine Ringkammer entsteht, deren Kanten die Steuerkanten 18 am Ventilschieber 3 bilden (Fig. 2). An den Stirnflächen des Ventilschiebers 3 sind vier freistehende Auflageabschnitte 19, deren Abstand von der restlichen Stirnfläche ca. 0,05 mm beträgt. Der Ventilschieber besteht aus magnetisierbarem Werkstoff.

Die Durchbohrung 13 im Gehäuse 4 und der Ventilschieber 6 und insbesondere die Steuerkanten 8, 18 sind mit einer Hartbeschichtung versehen, die z.B. aus Wolframkarbid oder Titannitrit besteht.

Jeder Elektromagnet besteht aus einer Spule 21, einen Spulenkörper 22, auf welchem die Spule direkt aufgewickelt ist und einen Ankerteil 23. Der Ankerteil 23 ist quaderförmig ausgebildet und besteht aus einem magnetisierbaren Material. Ausgehend von einer Stirnseite ist im Ankerteil 23 eine ringförmige Ausnehmung ausgebildet, derart, dass ein zylinderförmiger Ansatz 25 im Zentrum vorhanden ist. Im Ansatz ist eine Nut zur Aufnahme eines Dichtungsringes 26 ausgebildet. Am Nutengrund ist eine Rille 27 ausgebildet. Ferner weist der Ansatz 25 am freien Ende einen konischen Abschnitt 28 auf. In der ringförmigen Ausnehmung ist der Spulenkörper 22 mit der Spule 21 angeordnet. An der anderen Stirnseite des Ankerteiles 23 ist eine zylinderförmige Ausnehmung 29 ausgebildet. Ausgehend von dieser Ausnehmung sind Durchführungslöcher 30 für die Spulenanschlussleitungen ausgebildet, die sich durch den Flanschteil 31 des Spulenkörpers 12 erstrecken.

Zur Betätigung des Ventils wird jeweils ein Elektromagnet erregt. Durch das erzeugte Magnetfeld wird der Ventilschieber 6 an den Ankerteil 23 angezogen, bis die Oberflächen der freistehenden Abschnitte 19 an der Stirnseite des Ankerteiles anliegen. Um das Anziehen des Ventilkörpers 3 zu gewährleisten, muss das zwischen dem Ventilkörper 3 und dem Ankerteil 3 angesammelte Druckmittel, z.B. Oel in den Hohlraum im Ventilschieber verdrängt werden. Dadurch wird die Funktion des Ventils verbessert und es werden kürzere Schaltzeiten erreicht. Wird die Erregerspannung abgeschaltet, so wird der Ventilschieber durch die verbleibende Remanenz festgehalten. Der Erregerstrom erzeugt Wirbelströme im Spulenkörper. Um die Wirbelstromverluste zu minimieren, besteht der Spulenkörper aus Titan, welches eine geringe elektrische Leitfähigkeit von 0.23 · 10⁵ (Ω cm)⁻¹ aufweist.

Das Ventil umfasst ein Ventilgehäuse 4, einen Ventilschieber 6 und zwei Elektromagneten 2. Der Ventilschieber 6 ist im Gehäuse in einer Durchbohrung 13 verschiebbar angeordnet. Die Durchbohrung und der Ventilschieber sind mit einer Hartbeschichtung versehen, um die Anzahl von Schaltbewegungen zu erhöhen.

## Patentansprüche

1. Elektromagnetisches Ventil für hydraulische Medien, mit einem Ventilgehäuse, mit einem Ventilschieber, und mit zwei Elektromagneten mit je einem Spulenkörper (22), wobei der Ventilschieber jeweils bei der Erregung eines Elektromagneten in eine Schaltstellung bewegt und bei Abschaltung der Erregerspannung durch die verbleibende Remanenz festgehalten wird, **dadurch gekennzeichnet, dass** die Durchbohrung (13) im Gehäuse (4) und der Ventilschieber (6) mit einer Hartbeschichtung versehen sind und der Spulenkörper (22) aus einem Material mit einer elektrischen Leitfähigkeit kleiner als 3,00 · 10⁵ (Ω cm)⁻¹ besteht.

2. Ventil nach Anspruch 1, **gekennzeichnet durch** mindestens zwei freistehende Auflageabschnitte (19), die an die Stirnseiten des Ventilschiebers (3) ausgebildet und jeweils mit einem Elektromagneten in Wirkverbindung bringbar sind.

3. Ventil nach einem der Ansprüche 1 oder 2, **dadurch gekennzeichnet, dass** die Länge des Ventilgehäuses (4) kleiner als das 2,5-fache des Aussendurchmessers des Ventilschiebers (6) beträgt.

4. Ventil nach einem der Ansprüche 1 bis 3, **dadurch gekennzeichnet, dass** die Hartbeschichtung aus Titannitrit, Wolframkarbid oder dgl. besteht.

## Claims

1. Electromagnetic valve for hydraulic media including a valve housing, a valve slider and two electromagnets each having a coil body (22), with the valve slider being moved in each case when the electromagnet is excited and being held fast by the residual remanence when the excitation voltage is switched off, **characterised in that** the through-bore (13) in the housing (4) and the valve slider (6) are provided with a hard coating and the coil body (22) consists of a material with an electrical conductivity less than 3.00 · 10⁵ (Ω cm)⁻¹.

2. Valve in accordance with claim 1 **characterised by** at least two free standing support sections (19) which are formed at the end faces of the valve slider (3) and can each be brought into active contact with an electromagnet.

3. Valve in accordance with claim 1 or claim 2 **characterised in that** the length of the valve housing (4) amounts to less than 2.5 times the outer diameter of the valve slider (6).

4. Valve in accordance with one of the claims 1 to 3 **characterised in that** the hard coating consists of titanium nitride, tungsten carbide or the like.

## Revendications

1. Vanne électromagnétique pour des fluides hydrauliques, avec un boîtier de vanne, avec un tiroir de vanne et avec deux électro-aimants avec respectivement un corps de bobine (22), où le tiroir de vanne, respectivement lors de l'excitation d'un électro-aimant, est amené dans une position de commutation et, lors de la coupure de la tension d'excitation, est retenu par la rémanence restante, **caractérisée en ce que** le perçage traversant (13) dans le boîtier (4) et le tiroir de vanne (6) sont pourvus d'un revêtement dur, et **en ce que** le corps de bobine (22) est constitué d'un matériau d'une conductibilité électrique inférieure à 3,00 x 10⁵ (Ω cm)⁻¹.

2. Vanne selon la revendication 1, **caractérisée par** au moins deux tronçons d'application libres (19) qui sont réalisés aux côtés frontaux du tiroir de vanne (3) et qui peuvent chacun être amené en une liaison fonctionnelle avec un électro-aimant.

3. Vanne selon l'une des revendications 1 ou 2, **caractérisée en ce que** la longueur du boîtier de vanne (4) est plus petite que 2,5 fois le diamètre extérieur du tiroir de vanne (6).

4. Vanne selon l'une des revendications 1 à 3, **caractérisée en ce que** le revêtement dur est constitué d'une nitrure de titane, de carbure de tungstène ou analogue.
